# EUROPEAN PATENT SPECIFICATION

(11) **EP 1 740 443 B1**
(45) Date of publication and mention of the grant of the patent: **03.12.2014**
(21) Application number: 05714277.0
(22) Date of filing: 21.03.2005
(51) Int. Cl.: B62H 3/06, B62H 3/08, B62H 3/12, A47B 43/00, A47F 5/10

(54) **RACK**
GESTELL
RATELIER

(30) Priority: 19.03.2004 AU 2004901463
(43) Date of publication of application: 10.01.2007
(73) Proprietor: Steadman, David Lee, Applecross WA 6153 (AU); Collicott, Ronald James, Mandurah WA 6210 (AU)
(72) Inventor: Steadman, David Lee, Applecross WA 6153 (AU); Collicott, Ronald James, Mandurah WA 6210 (AU)
(74) Representative: Wilson Gunn
(86) International application number: PCT/AU2005/000405
(87) International publication number: WO 2005/090148

(56) References cited:
- AU-A- 4 516 100
- AU-B3- 654 800
- CH-A- 281 315
- FR-A1- 2 626 899
- FR-A1- 2 684 634
- GB-A- 2 317 599
- US-A- 590 773
- US-A- 615 264
- US-A- 2 922 683
- US-A- 3 785 500
- US-A- 3 883 002
- US-A- 5 505 318
- US-A- 6 164 465
- US-B1- 6 216 882

## Description

### Field of the Invention

This invention relates to a rack for receiving and supporting an item from a upstanding support.

### Background

In the storage of items, it is common practice to provide a rack which extends outwardly from a support (such as a wall). However, when the rack is unoccupied, it can present a difficulty in terms of usage of the space occupied for the rack.

A particular application of the invention relates to the storage of bicycles. The bicycle can present a problem in regard to its secure storage in a manner which is convenient. With the increased degree of medium density living the storage of a bicycle can present a problem.

US3883002 relates to a bicycle rack having a track for receiving the bicycle wheels and mounted at one end for swinging movement between an elevated storage position, and an inclined position with an opposite end of the track adapted to engage the floor or other supporting surface.

US615264, which describes all the features of the preamble of claim 1, relates to a bicycle carrier which may be secured to a back of a railway car or other vehicle. The carrier has a frame for supporting the wheel of a bicycle, the frame being secured to the railway car by a plate. The frame also has a brace connected thereto. A distal end of the brace is connected to the railway car by a block secured to the train.

### Disclosure of the Invention

Accordingly, the invention resides in a bicycle rack intended in use to be supported from a support, the rack comprising a base adapted to be fixed to the support, a support member connected to the base to enable the support member to be pivotable about a first axis which in use is to be generally level, the support member being moveable between a first position, at which it is adjacent to the support and a second position at which it extends laterally from the support, the rack further comprises a brace member which supports the support member when the support member is in its second position, whereby when in the second position, the support member and brace member are adapted to receive and support a portion of a wheel of a bicycle with the remainder of the bicycle being suspended from the wheel, the interengagement between the support member and the brace member results in the movement of the brace member as the support member moves from its first position to its second position, wherein the support member is provided with a first space defined by the arms of the support member configured to receive the portion of the wheel, characterised in that the brace member is pivotally supported from the base for pivotable movement about a second axis, the first and second axes being parallel and spaced from each other, and the support member and the brace member are also pivotable about a third axis which is generally parallel to the support, whereupon pivotal movement of the support member when in the second position causes the support member to move between positions substantially adjacent the support either side of the base; and wherein the first space is further defined by forming the inner ends of the arms to be inwardly convergent.

According to one embodiment, support member is pivotable from the base about a generally upright axis.

The support member is provided along at least a portion of its length with a first space adapted to receive the portion of the wheel. According to a preferred feature of the invention, the first space is configured in the form of a slot. According to a further preferred feature of the invention, the outer end of the first space is closed. According to a further preferred feature of the invention, the outer end of the support member is provided with an edge which is adapted to extend across the outer end of the first space to provide a guide surface. According to a preferred feature of the invention, the edge is defined by a first transverse member across the outer end of the first space. According to a preferred feature of the invention the edge has an upwardly directed concave profile.

According to the invention, the brace member is pivotally supported from the base for pivotable movement about a second axis, the first and second axes being parallel and spaced from each other, the brace member preferably being moveable with the support member such that, when the support member is in its second position, the brace member provides support to the support member. According to a further preferred feature of the invention, the support member and brace member are interengaged outward of their pivotable mountings such that movement of the support member causes movement of the brace member.

According to a preferred feature of the invention, the brace member is provided with a second space which cooperates with the first space defined by the support member to provide a combined space which is configured to receive the portion of the wheel, wherein the second space provides an upright extent to the combined space while the first space provides a lateral extent to the combined space.

According to one embodiment, the rack further includes a storage shelf adapted to receive and store further items, the storage shelf being supported from a side of the support member to extend transversely outward from the support member.

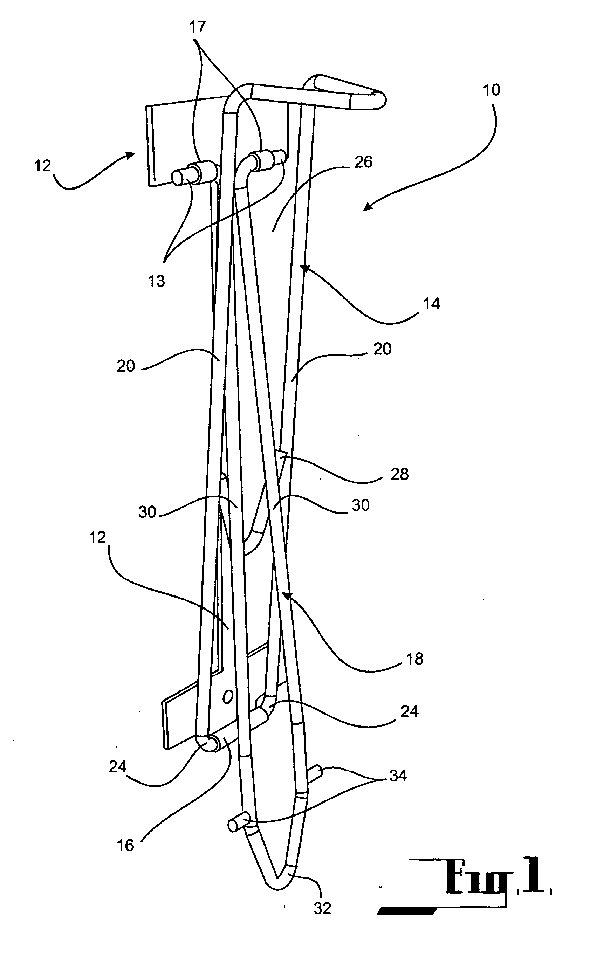

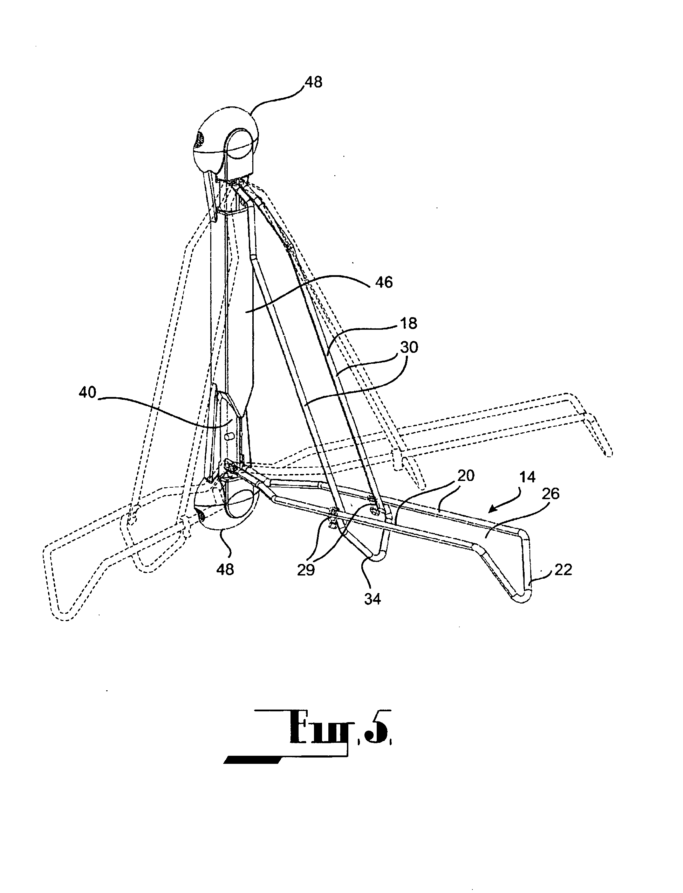

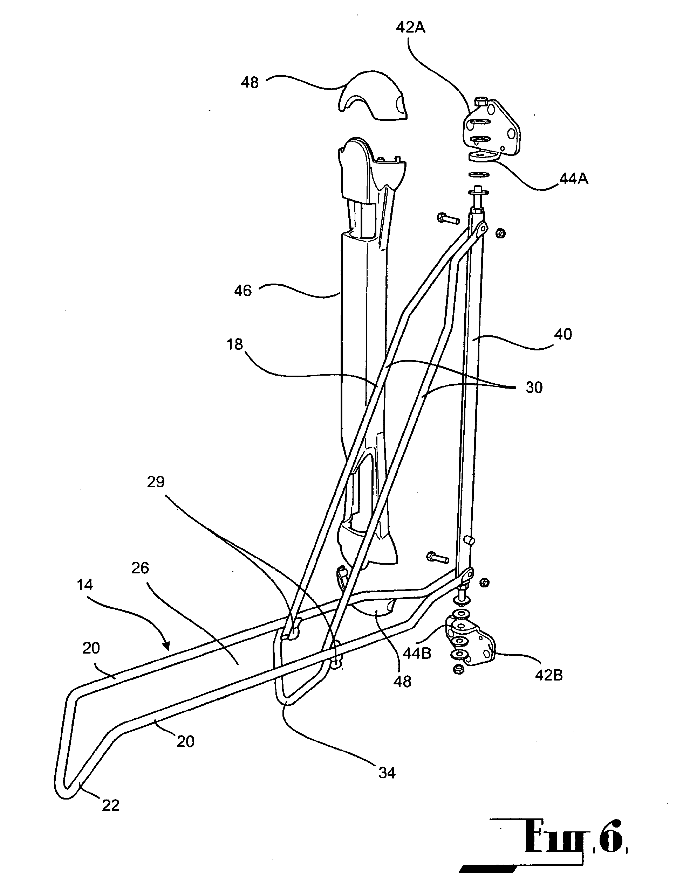

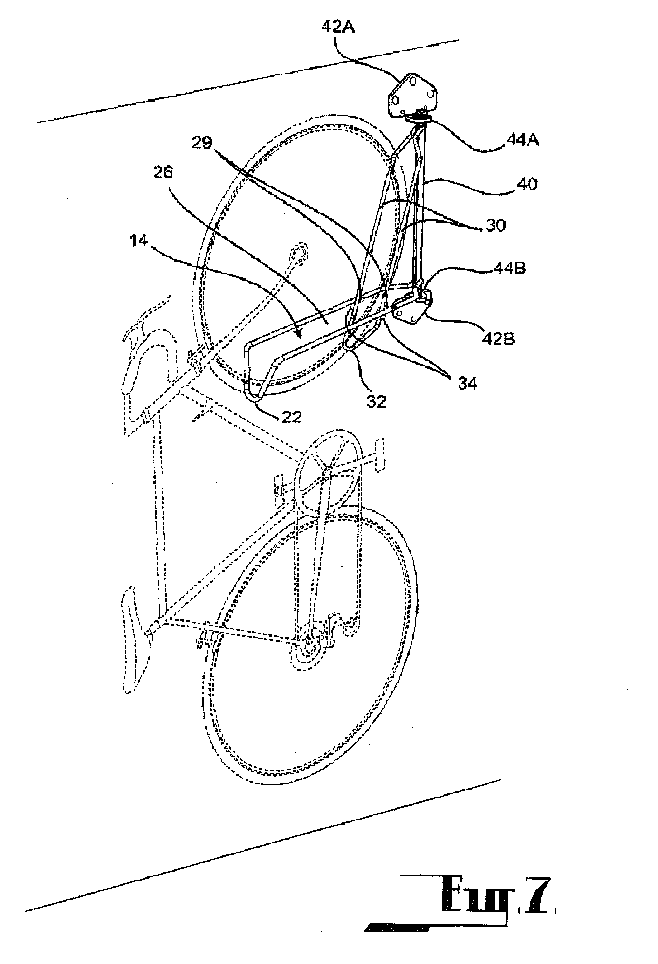

The invention will be more fully understood in the light of the following description of several specific embodiments. The racks shown in Figures 1 to 4 provide background information to aid the understanding of the invention, embodiments of which are shown in Figures 5 to 7.

### Brief Description of the Drawings

The description is made with reference to the accompanying drawings of which:
Figure 1 is a perspective elevation view of a bicycle rack in a collapsed condition;
Figure 2 is a perspective elevation view of a bicycle rack in an extended condition;
Figure 3 is a side elevation view of a bicycle rack supporting a bicycle;
Figure 4 is a perspective elevation view of a bicycle rack in an extended condition;
Figure 5 is a perspective elevation view of a bicycle rack according to the present invention in an extended condition;
Figure 6 is a perspective elevation view of a bicycle rack according to the present invention in an extended condition with the shroud and mounting shown in an exploded form; and
Figure 7 is a side elevation view of the bicycle rack according to the present invention supporting a bicycle.

### Detailed Description of the Specific Embodiment

The embodiment of the invention is illustrated in figures 5, 6 and 7 and comprises a rack 10 which in use is to be supported from an upstanding support such as a wall and is intended to receive a bicycle whereby, when the rack is not in use, it can be collapsed so as to minimise obstruction. In addition in each of the embodiments the bicycle is stored by supporting a wheel of the bicycle whereby the forces which are exerted on the wheel are similar to those for which the wheel is designed in order that the likelihood of the wheel being distorted by such storage is reduced when compared to methods which involve supporting the wheel at each side of the plane of the wheel off-centre from the axle or suspending the wheel from the inner perimeter of the rim.

In the case of the first rack as shown at Figures 1 to 3, which does not include the features of the invention as disclosed in the claims, the rack 10 comprises a generally planar base 12 which is adapted to be mounted, by conventional means, to a wall, though, if desired, it could be supported from a post, pillar or like element having an upstanding surface.

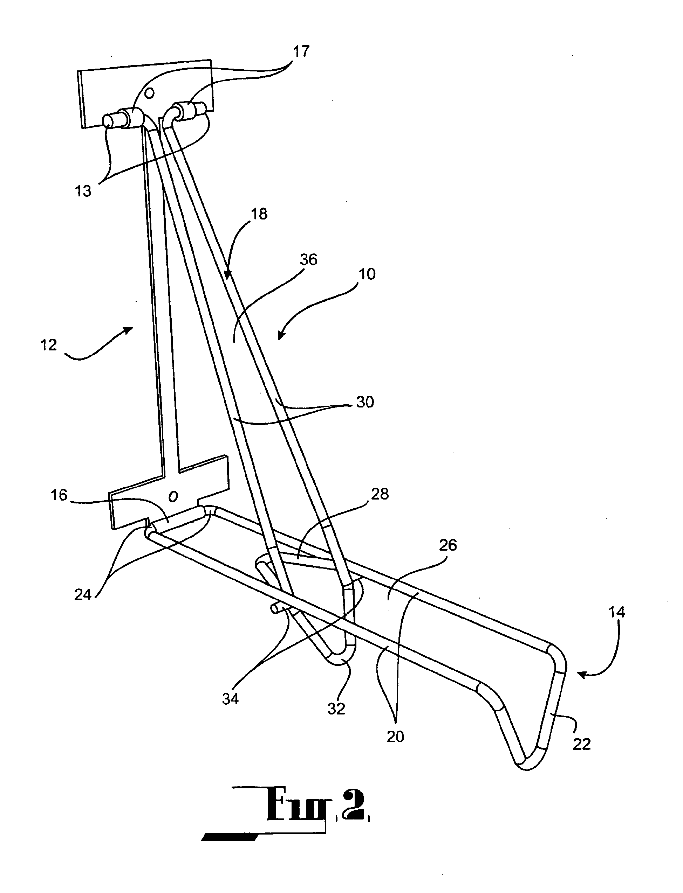

The rack 10 further comprises a support member 14 which is pivotally supported from the base 12 through a hinge housing 16 to be pivotable, about a generally level axis, between a first position at which it is adjacent to the wall (as shown Figure 1) and a second position at which position it extends laterally from the wall (as shown Figure 2) to be able to receive and support a bicycle wheel.

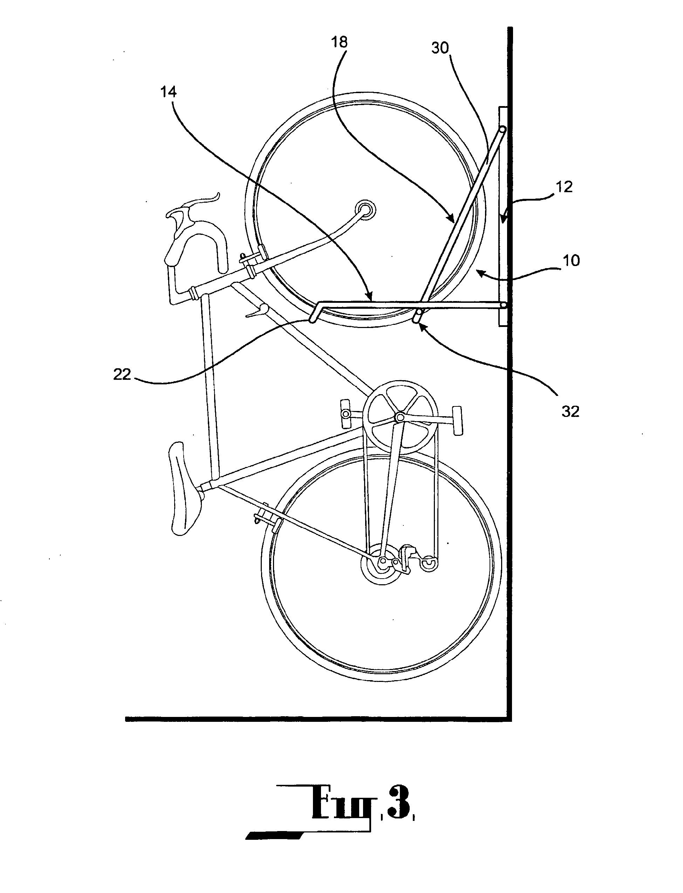

The support member 14 is formed from a single length of mild steel rod which is bent to provide a pair of parallel elongate arms 20 which are spaced from each other to provide a first space between themselves, where the free end portions 24 of the arm are pivotally received in the hinge housing 16. The other ends of the arms are outermost and are interconnected by a bridging portion 22. The bridging portion 22 has a concave profile which is downwardly directed, when the support member is in the second position as shown at Figures 2 and 3 and which is intended to serve as a guide for the wheel of a bicycle which is to be supported by the rack 10. The support member 14 further comprises a cross-member 28 which extends between the arms 20 of the support member 14 intermediate of the length of the support member 14. The cross-member 28 has a V-shaped configuration and is to be generally coplanar with the support member. The arms 20, bridging portion 22 and cross member 28 define a closed space 26 having the configuration of a slot which is dimensioned to receive a portion of the wheel of the bicycle to be supported from the rack 10 whereby the outer periphery of the wheel is engaged at two angularly spaced positions around the perimeter of the wheel by the bridging portion 22 and cross-member 28.

The rack 10 further comprises a brace member 18 which provides support for the support member 14 when in its second position. The brace member 18 is also pivotally supported from the base 12 and is also formed from a single length of mild steel rod bent at its mid-point to provide a pair of arms 30 where the free ends 13 of the arms 30 are pivotally supported from the base 12 by a pair of second hinge sleeves 17. The other ends of the arms 30 are interconnected by a second bridging portion 32. The brace member 18 is received in the space 26 and the outer ends of the arms 30 each support a laterally outwardly directed stop member 34 which is intended to receive and support the undersurface of arms 20 of the support member 14.

The interengagement between the support member 14 and brace member 18 is such that movement of the support member 14 from its first position to its second position effects corresponding movement of the brace member 18.

In use, and as shown at Figure 3, the front wheel of a bicycle is receivable in the spaces 26 of the support member 14 and the remainder of the bicycle is suspended from the front wheel. To mount a bicycle to the rack 10, the support member 14 is pivoted to its second position and the front wheel of the bicycle is raised such that the front wheel engages with the bridging portion 22 of the support member 14. In this regard, the rack 10 is preferably mounted at a height such that the front wheel will engage the bridging portion 22 of the support member 14 when the front wheel has been raised from the ground but while the rear wheel of the bicycle remains in contact with the ground. With an additional lifting force being applied to the bicycle, the bridging portion 22 is able to guide the front wheel of the bicycle into the space 26 and support a portion of the weight of the bicycle as the wheel rolls into engagement with the space 26. Because of the leverage function of the front wheel when engaged with the bridging porion 22 the user is not required to accommodate for the full weight of the bicycle since much of the load (even initially is accepted by the support member through the bridging portion 22.

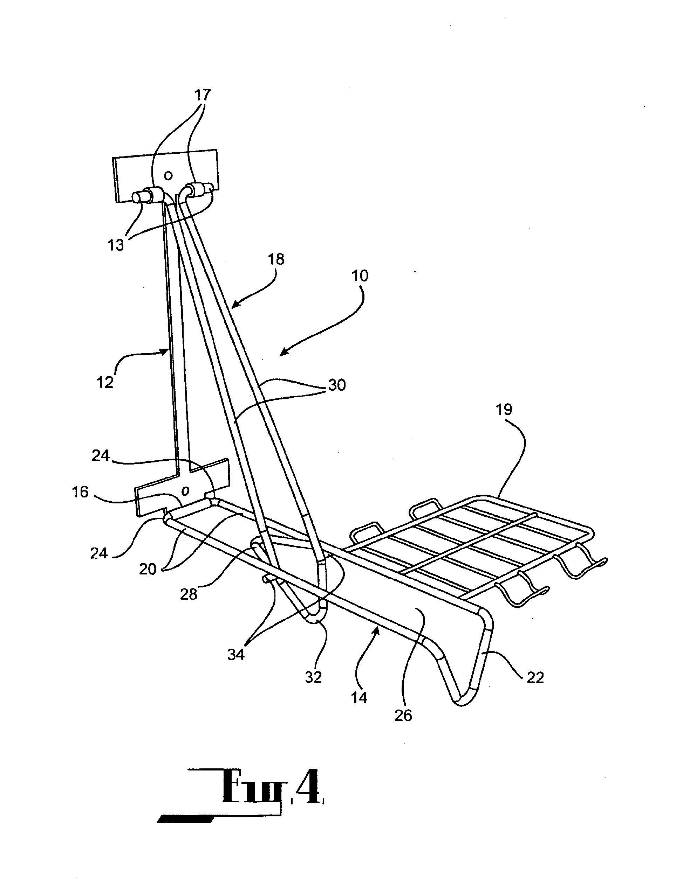

The second rack, as shown at Figure 4 (the same reference numerals will be used to denote corresponding components), which also does not include the features of the invention as disclosed in the claims, is identical to the first embodiment but also includes a removable shelf 19 supported from one of the arms 20 of the support member 14. The shelf 19 is generally coplanar with the arms 20 so that, when the support member 14 is in its first position, the shelf 19 lies adjacent to the wall and does not appreciably protrude therefrom. The shelf 19 may be utilised for storage of additional items, for example helmets and/or other cycling gear when the support member is in its second position.

The embodiment of the present invention, as shown at Figures 5, 6 and 7 (the same reference numerals will be used to denote corresponding components), is a variation of the first rack in that the support member 14 and brace member 18 are not only pivotable about generally level axes, but also are pivotable about a generally upright axis. To this end, the base 12 comprises an elongate member 40 from which the support member 14 and brace member are pivotally supported. The elongate member 40 is supported at each end by mounting brackets 42A and 42B through a pivot plates 44A and 44B respectively. The brackets 42A and 42B are adapted to be fixed to the wall The third embodiment further comprises a shroud 46 and end caps 48 which jointly cover the brackets 42A and 42B and the elongate member 40 and which serves to enhance the appearance of the rack 10.

In addition, the space 26, defined between the arms 20 of the support member 14, is not defined at its inner end by a cross-member, as in the case of the first and second racks, but rather by forming the inner ends of the arms to be inwardly convergent. In addition, the brace member 18 is slidably engaged with the arms 20 of the support member 14 through a pair of opposed lugs 29 on the arms 20 of the support member which limit the slidable movement of the brace member along the space. Each of the arms 30 are formed towards their lower ends with outwardly directed formations 34 which engage with the underneath of the arms 20 of the support member 14. Because the lugs 29 are located intermediate of the length of the space 26, the brace member provides additional support through the engagement of the formations 34 with the underneath of the support member, for the wheel of the bicycle when supported from the support member. In addition the brace serves to limit the pivotal movement of the wheel about the central axis of the space 26.

As illustrated in Figure 5 the pivoting facility offered by the elongate member 40 as illustrated in enables the support member 14 and brace member 18, and the bicycle supported thereby, to be jointly moved between a position to either side of the support brackets 42A and B close to the upstanding a wall (as shown in broken lines at Figure 5) and a position extending outwardly from the wall (as shown in solid lines at Figure 5). This reduces the extent to which the stored bicycle extends from the wall to provide a space-saving advantage.

In a further embodiment, the brace member extends upwardly from the base to the support member, to support the support member in its second position.

Owing to the generally planar nature of the support member, brace member and base of each embodiment, the rack in its collapsed condition (i.e. when the bracing and support members are in their first positions) does not protrude laterally to an appreciable extent, thereby offering a space-saving advantage.

Throughout the specification, unless the context requires otherwise, the word "comprise" or variations such as "comprises" or "comprising", will be understood to imply the inclusion of a stated integer or group of integers but not the exclusion of any other integer or group of integers.

It should be appreciated that the scope of the present invention is limited only by the claims and need not be limited to the particular scope of the embodiments described above. In addition the support can comprise any structure which enables the rack to be mounted such that it can receive an item and can include a support adapted to be mounted to a vehicle to facilitate the transport of the bicycle.

## Claims

1. A bicycle rack (10) intended in use to be supported from a support, the rack (10) comprising
a base (12) adapted to be fixed to the support,
a support member (14) connected to the base (12) to enable the support member (14) to be pivotable about a first axis which in use is to be generally level, the support member (14) being moveable between a first position, at which it is adjacent to the support and a second position at which it extends laterally from the support;
the rack (10) further comprises a brace member (18) which supports the support member (14) when the support member (14) is in its second position, whereby when in the second position the support member (14) and brace member (18) are adapted to receive and support a portion of a wheel of a bicycle with the remainder of the bicycle being suspended from the wheel, the interengagement between the support member (14) and brace member (18) results in the movement of the brace member (18) as the support member (14) moves from its first position to its second position;
wherein the support member (14) is provided with a first space (26), defined by arms (20) of the support member (14), configured to receive the portion of the wheel, **characterised in that**
the brace member (18) is pivotally supported from the base (12) for pivotable movement about a second axis, the first and second axes being parallel and spaced from each other, and
the support member (14) and the brace member (18) are also pivotable about a third axis which is generally parallel to the support, whereupon pivotal movement of the support member (14) when in the second position causes the support member (14) to move between positions substantially adjacent the support either side of the base (12); and
wherein the first space (26) is further defined by forming the inner ends of the arms (20) to be inwardly convergent.

2. A bicycle rack (10) as claimed at claim 1 wherein an outer end of the first space (26) is closed, the outer end of the support member (14) defines the outer end of the first space (26), the outer end providing an edge (22) which provides a guide and support surface for the wheel.

3. A bicycle rack (10) as claimed at claim 2, wherein the upper surface of the edge (22) has a concave profile.

4. A bicycle rack (10) as claimed at claim 3, wherein the edge (22) provides a leverage point to assist in moving the bicycle into and out of engagement with the first space (26).

5. A bicycle rack (10) as claimed at any one of the preceding claims wherein, the brace member (18) is moveable with the support member (14) such that, when the support member (14) is in its second position, the brace member (18) supports the support member (14).

6. A bicycle rack (10) as claimed at claim 5, wherein the support member (14) and brace member (18) are interengaged outward of their pivotable mountings such that movement of the support member (14) causes movement of the brace member (18).

7. A bicycle rack (10) as claimed at claim 6 wherein the brace member (18) is provided with a second space which cooperates with the first space (26) defined by the support member (14) to provide a combined space which is configured to receive the portion of the wheel, wherein the second space provides an upright extent to the combined space while the first space (26) provides a lateral extent to the combined space.

8. A bicycle rack (10) according to claim 7 wherein the second space converges at an upper end of the upright extent, such that in use the wheel is grippingly engaged by the brace member (18).

9. A bicycle rack (10) as claimed at any one of the preceding claims wherein the rack (10) further includes a storage shelf (19) supported from a side of the support member (14) to extend transversely outward from the support member (14).

10. A bicycle rack (10) as claimed at any one of the preceding claims wherein the brace members (18) are pivotable relative to the base (12) about the third axis.

11. A bicycle rack (10) as claimed at any one of the preceding claims, wherein the third axis is substantially perpendicular and coplanar with respect to the first axis.

12. A bicycle rack (10) as claimed at any one of the preceding claims wherein the brace member (18) is connected to the base (12) at a position above where the support member (14) is connected to the base.

## Patentansprüche

1. Fahrradgestell (10), welches vorgesehen ist, bei der Benutzung von einer Abstützung gestützt zu werden, wobei das Gestell (10) aufweist
eine Basis (12) ausgebildet, um an der Abstützung fixiert zu sein,
ein Stützelement (14), welches mit der Basis (12) verbunden ist, damit das Stützelement (14) um eine erste Achse schwenkbar ist, welche bei der Verwendung im Wesentlichen waagrecht ist, wobei das Stützelement (14) bewegbar zwischen einer ersten Position, welche benachbart zur Abstützung ist und einer zweiten Position, in der es sich seitlich von der Abstützung weg erstreckt, beweglich ist;
wobei das Gestell (10) des Weiteren ein Strebenelement (18) aufweist, welches das Stützelement (14) stützt, wenn das Stützelement (14) in seiner zweiten Position ist, wobei das Stützelement (14) und das Strebenelement (18) wenn in der zweiten Position ausgebildet sind, einen Teil eines Rades eines Fahrrades aufzunehmen und zu stützen, wobei der Rest des Fahrrades von dem Rad gestützt wird, wobei die Verbindung zwischen dem Stützelement (14) und dem Strebenelement (18) in einer Bewegung des Strebenelementes (18) resultiert, wenn sich das Stützelement (14) von seiner ersten Position in seine zweite Position bewegt;
wobei das Stützelement (14) mit einem ersten Freiraum (26) definiert durch Arme (20) des Stützelementes (14) ausgestaltet ist, weder ausgebildet ist, um den Teil des Rades aufzunehmen,
**dadurch gekennzeichnet,**
**dass** das Strebenelement (18) schwenkbar von der Basis (12) für eine Schwenkbewegung um eine zweite Achse gestützt wird, wobei die erste Achse und die zweite Achse parallel zueinander und beabstandet voneinander sind, und
das Stützelement (14) und das Strebenelement (18) auch um eine dritte Achse schwenkbar sind, welche im Wesentlichen parallel zu der Abstützung ist, wobei eine Schwenkbewegung des Stützelementes (14), wenn es in der zweiten Position ist, das Stützelement (14) veranlasst, sich zwischen Positionen im Wesentlichen benachbart zu der Abstützung auf beiden Seiten der Basis (12) zu bewegen;
wobei der erste Freiraum (26) weiter durch Ausbilden der inneren Enden der Arme (20) als nach innen zulaufend definiert ist.

2. Fahrradgestell (10) nach Anspruch 1,
wobei ein äußeres Ende des ersten Freiraums (26) geschlossen ist, das äußere Ende des Stützelementes (14) das äußere Ende des ersten Freiraumes (26) definiert, das äußere Ende eine Kante (22) bietet, welche eine Führung und Stützoberfläche für das Rad bietet.

3. Fahrradgestell (10) nach Anspruch 2,
wobei die obere Oberfläche der Kante (22) ein konkaves Profil hat.

4. Fahrradgestell (10) nach Anspruch 3,
wobei die Kante (22) einen Hebelpunkt bereitstellt, um eine Bewegung des Rades in und aus der Bindung mit dem ersten Freiraum (26) zu unterstützen.

5. Fahrradgestell (10) nach einem der vorangehenden Ansprüche,
wobei das Strebenelement (18) mit dem Stützelement (14) bewegbar ist, so dass wenn das Stützelement (14) in seiner zweiten Position ist, das Strebenelement (18) das Stützelement (14) stützt.

6. Fahrradgestell (10) nach Anspruch 5,
wobei das Stützelement (14) und das Strebenelement (18) außerhalb ihrer schwenkbaren Befestigung ineinandergreifen, so dass eine Bewegung des Stützelementes (14) eine Bewegung des Strebenelementes (18) verursacht.

7. Fahrradgestell (10) nach Anspruch 6,
wobei das Strebenelement (18) mit einem zweiten Freiraum ausgestalten ist, welcher mit dem ersten Freiraum (26) zusammenwirkt, welcher durch das Stützelement definiert ist, um einen gemeinsamen Freiraum zu bieten, welcher ausgestaltet ist, einen Bereich des Rades aufzunehmen, wobei der zweite Freiraum eine aufrechte Verlängerung des gemeinsamen Freiraumes bietet, während der erste Freiraum (26) eine waagrechte Verlängerung des gemeinsamen Freiraumes bietet.

8. Fahrradgestell (10) nach Anspruch 7,
wobei der zweite Freiraum am oberen Ende der aufrechten Ausdehnung zusammenläuft, so dass bei der Verwendung das Fahrrad fest von dem Strebenelement (18) gegriffen wird.

9. Fahrradgestell (10) nach einem der vorangehenden Ansprüche,
wobei das Gestell (10) des Weiteren ein Aufbewahrungsbord (19) aufweist, welches von einer Seite des Stützelementes (14) gestützt wird, um sich quer auswärts von dem Stützelement (14) zu erstrecken.

10. Fahrradgestell (10) nach einem der vorangehenden Ansprüche,
wobei das Strebenelement (18) relativ zu der Basis (12) um eine dritte Achse schwenkbar ist.

11. Fahrradgestell (10) nach einem der vorangehenden Ansprüche,
wobei die dritte Achse im Wesentlichen senkrecht und koplanar in Bezug auf die erste Achse ist.

12. Fahrradgestell (10) nach einem der vorangehenden Ansprüche,
wobei das Strebenelement (18) mit der Basis (12) an einer Position verbunden ist, über der das Stützelement (14) mit der Basis verbunden ist.

## Revendications

1. Râtelier pour bicyclette (10) devant lors de son utilisation être supporté par un support, ledit râtelier (10) comportant :
une base (12) adaptée pour être fixée à un support ;
un élément de support (14) relié à la base (12) de façon à permettre à l'élément de support (14) d'être pivotant autour d'un premier axe qui en utilisation est sensiblement de niveau, ledit élément de support (14) étant déplaçable entre une première position de laquelle il est adjacent au support et une deuxième position de laquelle il s'étend latéralement à partir du support ;
le râtelier comportant en outre un élément de renfort (18) qui supporte l'élément de support (14) lorsque l'élément de support (14) est dans sa deuxième position, selon lequel quand l'élément de support (14) dans la deuxième position et l'élément de renfort (18) sont disposés pour recevoir et supporter une portion de roue d'une bicyclette avec le reste de la bicyclette étant suspendu à la roue, l'action mutuelle entre l'élément de support (14) et l'élément de renfort (18) ayant pour effet le déplacement de l'élément de renfort (18) lorsque l'élément de support (14) se déplace de sa première position à sa deuxième position ;
dans lequel l'élément de support (14) est muni d'un premier espace (26) défini par les bras (20) de l'élément de support (14) mis en forme pour recevoir la portion de la roue, **caractérisé en ce que**
l'élément de renfort (18) est supporté de façon pivotante à partir de la base (12) de façon à pivoter autour un deuxième axe, le premier et le deuxième axes étant parallèles et espacés l'un de l'autre et
l'élément de support (14) et l'élément de renfort (18) étant également pivotant autour un troisième axe qui est généralement parallèle au support de sorte que le mouvement de pivotement de l'élément de support (14) lorsqu'il est dans la deuxième position permet à l'élément de support (14) de se déplacer entre des positions substantiellement adjacentes au support de chaque côté de la base (12); et
dans lequel l'espace (26) est de plus obtenu en formant les extrémités internes de bras (20) de façon qu'elle soient convergentes vers l'intérieur.

2. Râtelier pour bicyclette (10) tel que revendiqué à la revendication 1 dans lequel une extrémité distale du premier l'espace (26) est fermée, l'extrémité distale de l'élément de support (14) constitue l'extrémité distale du premier espace (26) l'extrémité distale ayant un rebord (22) qui fournit un guide et une surface de support pour la roue.

3. Râtelier pour bicyclette (10) tel que revendiqué à la revendication 2 dans lequel la surface supérieure du rebord (22) a un profil concave.

4. Râtelier pour bicyclette (10) tel que revendiqué à la revendication 3 dans lequel le rebord (22) fournit un point de levier pour aider le mouvement de la bicyclette à s'engager dans ou hors le premier espace (26).

5. Râtelier pour bicyclette(10) tel que revendiqué à l'une quelconque des revendications précédentes dans lequel l'élément de renfort (18) est déplaçable avec l'élément de support (14) de telle façon que lorsque l'élément de support (14) est dans sa deuxième position l'élément de renfort (18) supporte l'élément de support (14).

6. Râtelier pour bicyclette (10) tel que revendiqué à la revendication 5 dans lequel l'élément de support (14) et l'élément de renfort (18) sont reliés au-delà de leurs montages à pivotements de telle sorte que le déplacement de l'élément de support (14) provoque le déplacement de l'élément de renfort (18).

7. Râtelier pour bicyclette (10) tel que revendiqué à la revendication 6 dans lequel l'élément de renfort (18) est muni d'un deuxième espace qui coopère avec le premier espace (26) défini par l'élément de support (14) afin de fournir un espace combiné qui est configuré de façon à recevoir une portion de la roue, dans lequel le deuxième espace procure une extension vers le haut de l'espace combiné tandis que le premier espace (26) procure une extension latérale de l'espace combiné.

8. Râtelier pour bicyclette (10) selon la revendication 7 dans lequel le second espace converge à une extrémité supérieure de l'extension vers le haut, de sorte qu'en utilisation la roue soit engagée de façon adhérente par l'élément de renfort (18).

9. Râtelier pour bicyclette (10) tel que revendiqué à l'une quelconque des revendications précédentes dans lequel le râtelier (10) inclus de plus une étagère de rangement (19) supportée à partir d'un côté de l'élément de support (14) pour s'étendre transversalement vers l'extérieur de l'élément de support (14).

10. Râtelier pour bicyclette (10) tel que revendiqué à l'une quelconque des revendications précédentes dans lequel les éléments de renfort (18) sont pivotant par rapport à la base (12) autour du troisième axe.

11. Râtelier pour bicyclette (10) tel que revendiqué à l'une quelconque des revendications précédentes dans lequel le troisième axe est substantiellement perpendiculaire et coplanaire par apport au premier axe.

12. Râtelier pour bicyclette (10) tel que revendiqué à l'une quelconque des revendications précédentes dans lequel l'élément de renfort (18) est connecté à la base (12) à une position supérieure où l'élément de support (14) est connecté à la base.
